# EUROPÄISCHE PATENTSCHRIFT

(11) **EP 0 407 722 B1**
(45) Veröffentlichungstag und Bekanntmachung des Hinweises auf die Patenterteilung: **24.03.1993**
(21) Anmeldenummer: 90110332.5
(22) Anmeldetag: 31.05.1990
(51) Int. Cl.: G01L 19/00

(54) **Drucksensor, insbesondere für pneumatische Nutzfahrzeug-Bremsanlagen**
Pressure sensor, especially for pneumatic utility vehicle brake installations
Capteur à pression, en particulier pour installation de freins pneumatiques de véhicules utilitaires

(30) Priorität: 13.07.1989 DE 3923032
(43) Veröffentlichungstag der Anmeldung: 16.01.1991
(73) Patentinhaber: ROBERT BOSCH GMBH, 70442 Stuttgart (DE)
(72) Erfinder: Gassmann, Heiner, D-7300 Esslingen 1 (DE); Fecht, Günther, D-7149 Freiberg (DE)

(56) Entgegenhaltungen:
- DE-A- 3 621 386
- DE-U- 8 525 588
- US-A- 4 680 569

## Beschreibung

### Stand der Technik

Die Erfindung geht aus von einem Drucksensor nach der Gattung des Hauptanspruchs. Es ist schon ein solcher Drucksensor aus der DE-Gebrauchsmusterschrift 85 25 588 bekannt, bei dem der Grundkörper und der Druckstutzen aus einem metallischen Werkstoff, insbesondere Stahl, bestehen. Der Drucksensor kann entweder am Grundkörper oder am Druckstutzen befestigt werden. Da der Druckstutzen eine gerade zylindrische Form hat und daher keine formschlüssige Befestigung zuläßt, sind für eine kraftschlüssige Befestigung relativ große Haltekräfte erforderlich, welche Verspannungen der Grundplatte hervorrufen können. Hierdurch kann aber eine Verformung der Membran verursacht und das Meßergebnis verfälscht werden.

### Vorteile der Erfindung

Der erfindungsgemäße Drucksensor mit den kennzeichnenden Merkmalen des Hauptanspruchs hat demgegenüber den Vorteil, daß durch den Eingriff des Druckstutzens in die Gehäusebohrung eine sichere und druckdichte, vorwiegend auf Formschluß beruhende Befestigung des Grundkörpers im Gehäuse erzielt wird. Die Verbindung ist außerdem weitgehend spannungsfrei, da relativ geringe Kräfte im wesentlichen zwischen der Abschrägung und der von dieser abgewandten Seite des Bundes des relativ formstabilen Druckstutzens wirksam sind und daher nicht auf den Grundkörper übertragen werden.

Durch die in den Unteransprüchen aufgeführten Maßnahmen sind vorteilhafte Weiterbildungen und Verbesserungen des im Hauptanspruch angegebenen Drucksensors möglich.

Besonders vorteilhaft ist die Maßnahme gemäß Anspruch 2, weil hierdurch eine schnelle Steckmontage des Grundkörpers im Gehäuse erzielt wird bei geringem Einbauraum für das Halteelement.

Durch die im Anspruch 3 angegebene Ausgestaltung wird eine ausreichend große elastische Verformbarkeit des Halterings erzielt, welche gestattet, diesen sowohl durch Zusammendrücken in die Gehäusenut einzulegen als auch beim Einführen des Druckstutzens in die Gehäusebohrung ohne bleibende Verformung aufzuweiten.

Eine für den Haltering geeignete Werkstoffgruppe ist im Anspruch 4 genannt. Elastische Kunststoffe haben darüber hinaus den Vorteil, daß beim Angriff des Halterings am Bund des Druckstutzens Spannungsspitzen vermieden werden.

Mit der im Anspruch 5 gekennzeichneten Ausgestaltung wird eine Bemessung für die Bohrungsnut angegeben, aufgrund der eine Quetschverformung des Halterings beim Montagevorgang des Grundkörpers vermieden ist.

Weitere vorteilhafte Ausbildungen von Halteelementen für den Grundkörper sind in den Ansprüchen 6 und 7 angegeben.

Durch die im Anspruch 8 offenbarte Maßnahme wird eine radiale Zentrierung des Druckstutzens in der Gehäusebohrung sowie eine Verbesserung der Abdichtung erzielt.

### Zeichnung

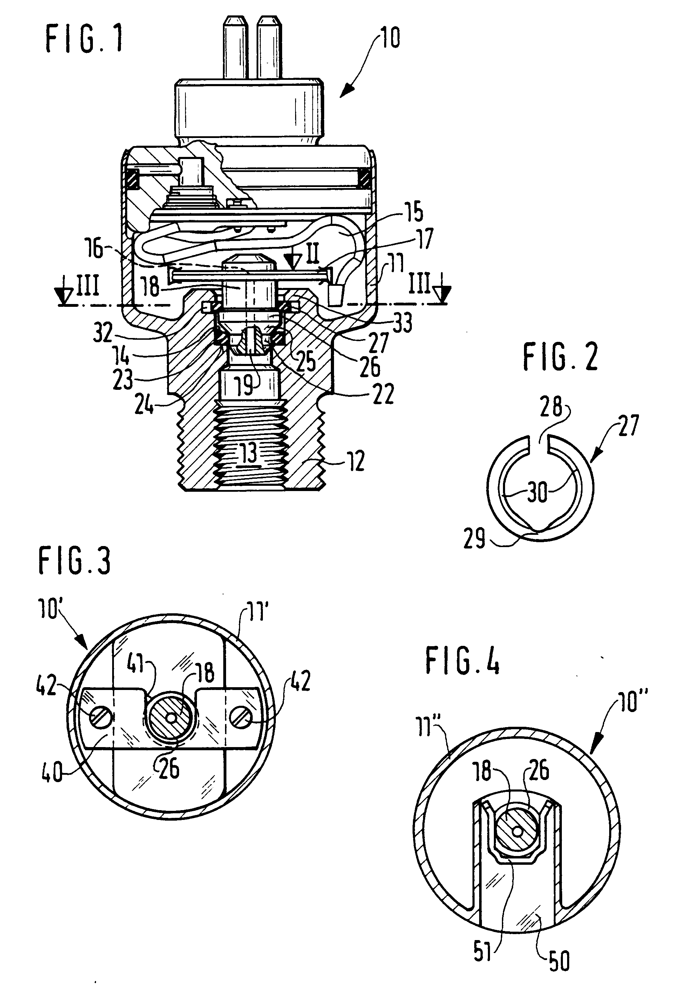

Ausführungsbeispiele der Erfindung sind in der Zeichnung vereinfacht dargestellt und in der nachfolgenden Beschreibung näher erläutert. Es zeigen Figur 1 einen Längsschnitt eines Drucksensors mit einem Gehäuse, in dem ein membrantragender Grundkörper mit Druckstutzen mittels eines Halterings befestigt ist, als erstes Ausführungsbeispiel, Figur 2 eine Ansicht des Halterings in Richtung des Pfeiles II in Figur 1 gesehen, Figur 3 einen Querschnitt durch den Drucksensor entlang der Linie III-III in Figur 1 mit einer Lasche zur Befestigung des Grundkörpers, als zweites Ausführungsbeispiel, und Figur 4 einen Querschnitt entsprechend Figur 3 mit einem Befestigungsmittel in Form einer Federspange, als drittes Ausführungsbeispiel.

### Beschreibung der Ausführungsbeispiele

Der in Figur 1 der Zeichnung dargestellte Drucksensor 10 ist zur Anwendung in pneumatischen Bremsanlagen von Nutzfahrzeugen vorgesehen, und zwar zur Erfassung des Bremsdrucks zwischen einem Bremszylinder und einem vorgeschalteten Drucksteuerventil.

Der Drucksensor 10 hat ein Gehäuse 11 aus Metall mit einem Einschraubstutzen 12, welcher eine Gewindebohrung 13 zum Heranführen von Druckluft aufweist. Die Gewindebohrung 13 geht mit einer gleichachsig verlaufenden, abgestuften Bohrung 14 in den Innenraum 15 des Gehäuses 11 über. Im Innenraum 15 des Gehäuses 11 ist ein mit einer Membran 16 versehener Grundkörper 17 des Drucksensors 10 angeordnet. Der plattenförmige Grundkörper 17 besteht aus Keramik; an seiner Unterseite ist er mit einem in die abgestufte Bohrung 14 des Gehäuses 11 eingreifenden Druckstutzen 18 versehen. Der Druckstutzen 18 hat eine Längsbohrung 19, welche die Membran 16 mit der druckführenden Gewindebohrung 13 des Gehäuses 11 verbindet.

Der Druckstutzen 18 weist an seinem freien Ende einen angefasten zylindrischen Abschnitt 22 auf, mit dem er in einen Dichtungsring 23 in Form eines O-Ringes eingreift. Der hierdurch radial vorgespannte Dichtungsring ist im Bereich einer Stufe 24 der Bohrung 14 abgestützt. Nach dem zylindrischen Abschnitt 22 geht der Druckstutzen 18 unter Bildung einer unter 45 Grad zur Längsachse verlaufenden Abschrägung 25 in einen zylindrischen Bund 26 über. Dieser Bund 26 des Druckstutzens 18 ist auf der von der Abschrägung 25 abgewandten Seite beim in Figur 1 dargestellten ersten Ausführungsbeispiel von einem am Gehäuse 11 sich abstützenden Halteelement in Form eines Halteringes 27 hintergriffen. Der Haltering 27 weist die in Figur 2 dargestellte Form auf. Er besteht aus einem elastischen Kunststoff, z. B. aus Polyacetal, und ist in Form eines offenen Sprengrings gestaltet: Er hat eine Umfangsöffnung 28, der diametral ein Abschnitt 29 mit in radialer Richtung verjüngtem Querschnitt gegenüberliegt. Die parallel zueinander verlaufenden Stirnflächen des Halterings 27 sind entlang ihrer dem Druckstutzen 18 zugewandten Innenkante mit einer Abrundung 30 versehen.

Der elastisch zusammendrückbare und aufweitbare Haltering 27 ist in eine passende Nut 32 der abgestuften Bohrung 14 eingefügt. In seiner in Figur 1 dargestellten Einbaulage umfaßt der Haltering 27 den Druckstutzen 18; gleichzeitig hintergreift der Haltering 27 den Bund 26 des Druckstutzens 18 auf seiner von der Abschrägung 25 abgewandten Seite. Der in der Einbaulage an der gegenüberliegenden Nutbegrenzungswand 33 abgestützte Haltering 27 bewirkt aufgrund seiner Elastizität und der Abmessungen des Bundes 26 und der Abschrägung 25 einerseits sowie der axialen Lage der Nut 32 und der Stufe 24 andererseits auch eine axiale Verspannung des Dichtungsringes 23. Hierdurch wird zum einen eine Abdichtung des Druckstutzens 18 im Gehäuse 11 des Drucksensors 10 erzielt, zum anderen ist damit eine spielfreie Lagerung des Druckstutzens im Gehäuse erreicht.

Vor der Montage des Grundkörpers 17 im Gehäuse 11 des Drucksensors 10 werden der Dichtungsring 23 und der Haltering 27 in die abgestufte Bohrung 14 eingefügt. Beim Einbringen in die Bohrung 14 wird der Haltering 27 zusammengedrückt; er federt beim Eindringen in die Nut 32 in seine ursprüngliche Form zurück. Beim Einführen des Druckstutzens 18 in die Bohrung 14 weitet die Abschrägung 25 den Haltering 27 elastisch auf. Anschließend durchdringt der Bund 26 des Druckstutzens 18 den Haltering 27. Dabei kann der Haltering 27 in die Nut 32 ausweichen, weil diese einen Durchmesser hat, welcher wenigstens dem Durchmesser des Bundes 26 zuzüglich der zweifachen radialen Breite des Ringquerschnitts entspricht. Beim Angriff der Abschrägung 25 am Dichtungsring 23 nimmt der Bund 26 eine Lage ein, in welcher der Haltering 27 unter Angriff an der von der Abschrägung 25 abgewandten Seite des Bundes zurückfedern kann. Das Hintergreifen des Bundes 26 wird durch die umlaufende Abrundung 30 erleichtert.

Die für diesen Fügevorgang auf den Grundkörper 17 auszuübenden Kräfte sind relativ gering. Es ist daher auch möglich, die Montage in der Weise durchzuführen, daß von der Seite der Gewindebohrung 13 des Gehäuses 11 her ein aufweitbarer Dorn in die Längsbohrung 19 des Druckstutzens 18 eingeführt, dort radial aufgeweitet und der Druckstutzen 18 aufgrund dieses Kraftschlusses in die abgestufte Bohrung 14 gezogen wird. Diese Montageart hat den Vorteil, daß keine Montagekräfte auf den empfindlichen Grundkörper 17 ausgeübt werden.

Beim in Figur 3 dargestellten zweiten Ausführungsbeispiel dient als Halteelement für den formgleichen Druckstutzen 18 eine Lasche 40 aus Blech, welche mit einer einseitig offenen Ausnehmung 41 versehen und mit zwei Schrauben 42 am Gehäuse 11′ des Drucksensors 10′ befestigt ist. Die Lasche 40 hintergreift den Bund 26 des Druckstutzens 18 und tragt in gleicher Weise wie beim ersten Ausführungsbeispiel zur Abdichtung und Lagesicherung des Druckstutzens in der abgestuften Bohrung 14 des Gehäuses 11′ bei.

Beim in Figur 4 wiedergegebenen dritten Ausführungsbeispiel ist das Gehäuse 11˝ des Drucksensors 10˝ mit einer quer zur Bohrungsachse verlaufenden, schlitzförmigen Durchbrechung 50 versehen. In diese Durchbrechung 50 ist eine U-förmige, aus Runddraht hergestellte Federspange 51 eingeschoben, welche den Druckstutzen 18 umfaßt und einerseits am Bund 26 und andererseits am Gehäuse 11˝ abgestützt ist. Auch diese Befestigungsart hält den Druckstutzen 18 dicht und sicher in der abgestuften Bohrung 14 des Gehäuses 11˝.

## Patentansprüche

1. Drucksensor (10), insbesondere für pneumatische Nutzfahrzeug-Bremsanlagen, mit einem eine Membran (16) aufweisenden Grundkörper (17) und einem mit diesem verbundenen, rohrförmigen Druckstutzen (18) zum Heranführen von Druckmedium an die Membran und zum Befestigen des Grundkörpers,
gekennzeichnet durch die Merkmale:
a) der Druckstutzen (18) ist mit einem Bund (26) versehen, welcher gegen das freie Stutzenende hin eine umlaufende Abschrägung (25) aufweist,
b) der Druckstutzen (18) greift in eine abgestufte Bohrung (14) eines den Grundkörper (17) aufnehmenden Gehäuses (11) ein,
c) an einer Stufe (24) der Gehäusebohrung (14) ist ein Dichtungsring (23) abgestützt, an dem der Druckstutzen (18) mit seiner Abschrägung (25) angreift,
d) der Bund (26) des Druckstutzens (18) ist auf der von der Abschrägung (25) abgewandten Seite von einem am Gehäuse (11) abgestützten Halteelement (27, 40, 51) hintergriffen.

2. Drucksensor nach Anspruch 1, dadurch gekennzeichnet, daß in eine umlaufende Nut (32) der Gehäusebohrung (14) als Halteelement ein elastisch aufweitbarer Haltering (27) eingefügt ist, welcher den Bund (26) des Druckstutzens (18) auf der von der Abschrägung (25) abgewandten Seite hintergreift.

3. Drucksensor nach Anspruch 2, dadurch gekennzeichnet, daß der Haltering (27) die Form eines offenen Sprengrings hat, dessen der Umfangsöffnung (28) gegenüberliegender Abschnitt (29) in radialer Richtung im Querschnitt verjüngt ist.

4. Drucksensor nach Anspruch 2 oder 3, dadurch gekennzeichnet, daß der Haltering (27) aus einem elastischen Werkstoff (z. B. Kunststoff) besteht.

5. Drucksensor nach Anspruch 2, dadurch gekennzeichnet, daß die Nut (32) der Gehäusebohrung (14) einen Durchmesser hat, der wenigstens dem Durchmesser des Bundes (26) am Druckstutzen (18) zuzüglich der zweifachen Breite des Querschnitts des Halterings (27) entspricht.

6. Drucksensor nach Anspruch 1, dadurch gekennzeichnet, daß das Halteelement als am Gehause (11′) befestigte Lasche (40) ausgebildet ist, die mit einer einseitig offenen Ausnehmung (41) den Bund (26) des Druckstutzens (18) hintergreift.

7. Drucksensor nach Anspruch 1, dadurch gekennzeichnet, daß als Halteelement eine Federspange (51) vorgesehen ist, welche unter Angriff am Bund (26) in einer quer zur Bohrungsachse verlaufenden Durchbrechung (50) des Gehäuses (11˝) sitzt.

8. Drucksensor nach Anspruch 1, dadurch gekennzeichnet, daß der Druckstutzen (18) gegen sein freies Ende hin mit einem in den Dichtungsring (23) eingreifenden, zylindrischen Abschnitt (22) versehen ist.

## Claims

1. Pressure sensor (10), in particular for pneumatic brake systems of commercial vehicles, having a basic body (17) having a membrane (16), and having a tubular delivery nozzle (18) which is connected to said basic body for conducting a pressure medium to the membrane and for attaching the basic body, characterised by the features:
a) the delivery nozzle (18) is provided with a collar (26) which has a circumferential bevel (25) towards the free end of the nozzle,
b) the delivery nozzle (18) engages in a stepped bore (14) of a housing (11) accommodating the basic body (17),
c) a sealing ring (23) is supported on a step (24) of the housing bore (14), on which sealing ring the delivery nozzle (18) engages with its bevel (25),
d) a holding element (27, 40, 51) which is supported on the housing (11) engages behind the collar (26) of the delivery nozzle (18) on the side facing away from the bevel (25).

2. Pressure sensor according to Claim 1, characterised in that an elastically expandable holding ring (27) is inserted as holding element in a circumferential groove (32) of the housing bore (14), which holding ring engages behind the collar (26) of the delivery nozzle (18) on the side facing away from the bevel (25).

3. Pressure sensor according to Claim 2, characterised in that the holding ring (27) has the form of an open spring ring whose portion (29) opposite the opening (28) in the circumference is tapered in cross-section in the radial direction.

4. Pressure sensor according to Claim 2 or 3, characterised in that the holding ring (27) is composed of an elastic material (e.g. plastic).

5. Pressure sensor according to Claim 2, characterised in that the groove (32) of the housing bore (14) has a diameter which corresponds at least to the diameter of the collar (26) on the delivery nozzle (18) plus the twofold width of the cross-section of the holding ring (27).

6. Pressure sensor according to Claim 1, characterised in that the holding element is constructed as a strap (40) which is attached to the housing (11′) and grips behind the collar (26) of the delivery nozzle (18) with a cutout (41) which is open on one side.

7. Pressure sensor according to Claim 1, characterised in that a spring clip (51) is provided as holding element, which spring clips sits, with engagement on the collar (26), in an opening (50) in the housing (11˝) running transversely to the bore axis.

8. Pressure sensor according to Claim 1, characterised in that the delivery nozzle (18) is provided towards its free end with a cylindrical portion (22) which engages in the sealing ring (23).

## Revendications

1. Capteur à pression (10) notamment pour des installations de freinage pneumatique de véhicules utilitaires, avec un corps de base (17) comportant une membrane (16) et une tubulure de pression (18) en forme de tube relié à ce corps de base pour amener le fluide sous pression à la membrane et pour permettre la fixation du corps de base, capteur à pression, caractérisé en ce que :
a) la tubulure de pression (18) est munie d'un bandeau (26) qui comporte contre l'extrémité libre de la tubulure, un chanfrein périphérique (25),
b) la tubulure de pression (18) vient en prise dans un alésage épaulé (14) d'un boîtier (11) dans lequel est logé le corps de base (17),
c) contre un épaulement (24) de l'alésage (14) du boîtier, prend appui un anneau d'étanchéité (23) sur lequel la tubulure de pression (18) vient en prise par son chanfrein (25),
d) le bandeau (26) de la tubulure de pression (18) est en prise, derrière son côté opposé au chanfrein (25), avec un élément de maintien (27, 40, 51) prenant appui contre le boîtier (11).

2. Capteur à pression selon la revendication 1, caractérisé en ce que dans une gorge périphérique (32) de l'alésage (14) du boîtier, est inséré en tant qu'élément de maintien, un anneau de maintien (27) susceptible d'être élargi élastiquement, et qui vient en prise derrière le bandeau (26) de la tubulure de pression (18) sur le côté opposé au chanfrein (25).

3. Capteur à pression selon la revendication 2, caractérisé en ce que l'anneau de maintien (27) a la forme d'un anneau extensible ouvert, dont la partie (29) opposée à l'ouverture périphérique (28) est rétrécie en section transversale dans la direction radiale.

4. Capteur à pression selon la revendication 2 ou la revendication 3, caractérisé en ce que l'anneau de maintien (27) est constitué par un matériau élastique (par exemple de la matière synthétique.

5. Capteur à pression selon la revendication 2, caractérisé en ce que la gorge (32) de l'alésage (14) du boîtier a un diamètre qui correspond au moins au diamètre du bandeau (26) sur la tubulure de pression (18) plus deux fois la largeur de la section transversale de l'anneau de maintien (27).

6. Capteur à pression selon la revendication 1, caractérisé en ce que l'élément de maintien est réalisé sous la forme d'une languette (40) fixée sur le boîtier (11′) et qui vient en prise derrière le bandeau (26) de la tubulure de pression (18) par un évidement (41) ouvert d'un côté.

7. Capteur à pression selon la revendication 1, caractérisé en ce qu'il est prévu comme élément de maintien une agrafe élastique (51) qui, venant en prise contre le bandeau (26), est placée dans un évidement (50) du boîtier (11˝) s'étendant transversalement par rapport à l'axe de l'alésage.

8. Capteur à pression selon la revendication 1, caractérisé en ce que la tubulure de pression (18) est munie contre son extrémité libre, d'une partie cylindrique (22) venant en prise dans l'anneau d'étanchéité (23).
